# EUROPEAN PATENT APPLICATION

(11) **EP 1 785 935 A2**
(43) Date of publication of application: **16.05.2007**
(21) Application number: 07100236.4
(22) Date of filing: 11.08.2000
(51) Int. Cl.: G06Q 30/00

(54) **System and method for digitally providing and displaying advertisement information to cinemas and theaters**

(30) Priority: 13.08.1999 US 148807; 28.07.2000 US 627870
(62) Divisional of application: 00957405.4
(71) Applicant: Cineast, LLC, Cambridge, MA 02138-2731 (US)
(72) Inventor: Spoogis, David H., Watertown, MA 02472 (US)
(74) Representative: Valea AB

(57) **Abstract**

A system is disclosed for communicating with, and displaying data representative of advertisement information to, movie projection equipment in theatres. The system includes a computer storage unit for receiving and storing data representative of advertisement information. The system also includes a plurality of digital projectors coupled to the computer storage unit for receiving data from the computer storage unit. The system also includes a movie identification input unit for receiving information regarding a movie that is to be shown in a theatre environment associated with a first of the plurality of digital projectors. The system also includes a controller for selecting certain stored data for transmission to the first digital projector responsive to the movie identification input unit.

## Description

This application claims priority to United States Provisional Patent Application Serial No. 60/148,807 filed on August 13, 1999, and United States Patent Application Serial No. 09/627,870 filed on July 28, 2000, both of which are hereby incorporated by reference.

### BACKGROUND

The invention relates generally to systems and methods for providing advertisement and other information to audiences in a theatre environment, specifically a movie theatre or cinema.

Advertisement and accompanying information is typically provided to cinema audiences by media managers via film projection technology. Media managers generally sell advertising in two forms: slide (also called fixed stock) and movie (also called rolling stock). The two forms of advertising are presented to movie theater audiences prior to the feature presentation. Typically, fixed stock is presented when the auditorium lights are dimly lit and moviegoers are entering the theater to take their seats during the seating period. Rolling stock is typically presented when the lights have been lowered and most of the moviegoers are seated during the pre-feature period. Fixed stock has a smaller and less attentive audience than rolling stock.

Fixed stock is inherently static whereas rolling stock is inherently time-variant or dynamic. Fixed stock is typically exposed for about 10 seconds per message whereas rolling stock is typically run for about 60 seconds per message. The cost of production for fixed stock is significantly lower than the cost of production for rolling stock. With a lower cost of production and a smaller target audience, fixed stock is a significantly less expensive form of advertising than rolling stock. Because of these differences, fixed and rolling stock are managed differently. Fixed stock is typically sold on a local level and targeted to smaller markets. Rolling stock is typically sold nationally and targeted to larger markets.

Both forms of stock may be used to convey non-advertising content as well as advertising content. Non-advertising content includes, but is not limited to, public service messages and content for the purpose of entertaining. Particularly in the case of fixed stock, entertaining content is interleaved with advertising content. This serves the purpose of filling unsold advertising slots and enhances the appeal of the overall presentation to the moviegoer audience.

In the cases of both fixed stock and rolling stock, the message takes a physical form, e.g., slides or film. A physical copy of each slide or film is required in every theater screen location. Distribution of the physical materials is repetitious and costly. It is also labor intensive and error prone, particularly with respect to fixed stock. Therefore, updating the content regularly is rather expensive and may be unreliable. Content may be occasionally inserted incorrectly or updated inappropriately. Because the content is rather expensive to update, the only practical form of market segmentation available to the advertisers has been segmentation by geographical location.

Systems have been disclosed for transmitting motion picture cinematic information to movie theatres. For example, U.S. Patent No. 5,294,013 discloses a method and apparatus for distributing digital data representing motion picture cinemagraphic information from a central site to a motion picture theatre via radio frequency communication. No disclosure is made, however, of providing advertisement information to motion picture audiences nor of targeting specific audiences based on their interests, nor of measuring the exposure of advertisements.

Advertising systems in other forums have been disclosed. For example, U.S. Patent No. 5,955,710 discloses a system for transmitting digital data representative of advertisement information to elevator display units in elevators. Although such systems are disclosed to include targeting based on "micro-demographics", e.g., business population, and are disclosed to provide time slots based on the time of day, e.g., prime time morning, there is no targeting of advertisements based on the common interests of the riders in the elevator, which may include not only business people but staff, visitors and delivery people as well. If such systems were used in theatres, even with a digital distribution system such as disclosed in U.S. Patent No. 5,294,013, they would not achieve the advertisement targeting objectives of the present invention.

There is a need, therefore, for a more efficient, entertaining, and effective form of advertising to movie theatre audiences.

### SUMMARY

The invention provides a computer-based system for acquiring, archiving, retrieving, scheduling, assembling and rendering digital content to bring messages, including advertising, to movie theater audiences via movie theater screens in a preferred embodiment. Messages are received in digital form from content providers over the Internet or by other digital means, scheduled and staged on one or more server volumes. Content is assembled into a presentation according to a schedule and electronically rendered to its intended audience. Presentation logs are generated from each showing and correlated with box office sales to calculate audience exposure. Exposure rates may be used for billing, cost/benefit analysis and other purposes.

Using the system and method according to an embodiment of the present invention, there is no physical media to be manufactured, distributed and disposed, nor any media that may deteriorate or break. There is no physical labor required to update the content at each site thereby decreasing costs and increasing reliability. Low update cost makes new forms of market segmentation available which facilitates more targeted and cost-effective advertising.

The goals of the present invention with respect to the content provider (typically an advertiser) are to decrease time and cost of updating content, increase reliability, increase control over market segmentation, facilitate use of rich media formats, increase efficiency of the placement interface and process, and provide detailed exposure reports. The goals with respect to the media manager are to reduce the labor required for placement and delivery, and reduce the consumption of materials. The goals with respect to the moviegoer are to increase the pertinence and provide an engaging presentation.

A further goal of the present invention is to provide content providers with a rapid, low-cost, and highly reliable way to update content. This allows advertisers to keep movie advertisements current with their changing advertising campaigns. This also allows advertisers to segment the market in many new ways, by-movie and by-time, as well as by-location. To target by-movie means that advertisers may segment the moviegoer market according to their preference of movie. To target by-time means that advertisers may segment the moviegoer market according to their preference of time of day to see a movie, by day of week, or time with respect to its release date and expected life in the cinemas. By segmenting the market along one or more of these dimensions (including by-location), advertisers can more effectively reach their target market, which is of tremendous significance to advertisers.

A further goal of the invention is to provide advertisers the use of rich media formats. Electronic formats, facilitated by the present invention, bring new opportunities for content, specifically rich media formats. In addition to static and dynamic content implemented through streaming video (which are akin to fixed and rolling stock) rich media includes other forms of time-variant content, most notably animations. Rich media bridges the gap between fixed and rolling stock. Rich media formats, such as SHOCKWAVE (sold by Macromedia, Inc of San Francisco, California), FLASH (also sold by Macromedia, Inc.), and animated GIF (sold by CompuServe, Inc. of Columbus, Ohio), provide the screen advertiser with new opportunities to catch the moviegoer's attention and make more captivating impressions without the typically high cost of production for rolling stock.

A further goal of the invention is to provide advertisers with direct, efficient control over their job placement. The present invention allows content providers to electronically transfer content via the Internet. This means that content could flow from the content provider's desktop to moviegoer audiences across the country and even other countries with no physical intervention. However, the present invention includes safeguards in the workflow that may intervene in the event of malicious activity. The ability to deliver content to an audience within hours qualifies the present invention as a vehicle for just-in-time advertising.

A further goal of the invention is to provide advertisers with detailed exposure reports. A system of the present invention will generate logs at every showing. These logs will accurately record the presentation of contents as the presentation proceeds. A system in accordance with the present invention will also receive box office data from the exhibitor on a per-showing basis. Bringing the box office data together with the log data, the system of the present invention may calculate detailed exposure rates. The exposure rates may, in-turn, be used to bill the content provider based on the number of moviegoers reached. The exposure rates may also be used by the advertiser in cost/benefit analysis of this form of advertising, and may further be used by the advertiser to refine their target audience. An extension of the present invention may also perform the cost benefit analysis by correlating this data with advertiser sales data.

A further goal of the invention is to reduce the labor associated with the present art which accounts for the current cost and potential unreliability. This includes reducing the labor of content placement from the content provider to the media manager and to reduce the labor in content delivery from the media manager to the theater screen location.

A further goal of the invention is to reduce the consumption of materials such as the film, which is replicated for every screen location. By eliminating the consumption of film, a significant cost is eliminated and the burden on the earth's environment is reduced.

A further goal of the invention is to increase the pertinence of the presentation to the moviegoer. This goal is achieved primarily by the content providers. The content providers will segment the audience for cost effectiveness. By doing so, moviegoers are more likely to be interested in the content.

A further goal of the invention is to present the content using more engaging formats. Again, this is accomplished primarily through the activities of the content providers. With rich media formats available, content providers such as advertisers will create more captivating contents to increase the effectiveness of their content in delivering a message. By their very nature, these contents will be more entertaining to the moviegoer.

### BRIEF DESCRIPTION OF THE DRAWINGS

The following description may be further understood with reference to the accompanying drawings in which:
Figure 1 shows an illustrative view of an advertisement image in accordance with an embodiment of the invention to be shown in a cinema;
Figure 2 shows an illustrative view of the physical architecture of a system of the invention;
Figure 3 shows an illustrative view of a portion of a system of the invention to be located at a cinema having a single theatre in accordance with an embodiment of the invention;
Figure 4 shows an illustrative view of a portion of a system of the invention to be located at a cinema having a plurality of cinema screens in accordance with another embodiment of the invention;
Figure 5 shows an illustrative functional view of the access and data flow in accordance with an embodiment of a system of the invention.
Figure 6 shows an illustrative functional view of a server system in accordance with an embodiment of the invention;
Figure 7A shows an illustrative relational view of participating elements in accordance with an embodiment of the invention;
Figure 7B shows an illustrative user state-transition diagram in a system of the invention;
Figure 8 shows an illustrative account state-transition diagram in a system of the invention;
Figure 9 shows an illustrative graphical representation of advertisement placement control in accordance with an embodiment of the invention;
Figure 10 shows an illustrative job state-transition diagram in a system of the invention;
Figure 11 shows an illustrative entity relationship diagram for a system of the invention;
Figure 12 shows an illustrative relational diagram of various permutations of a schedule request in accordance with an embodiment of the present invention;
Figure 13 shows an illustrative view of the process of assembling advertisement and non-advertisement contents in accordance with an embodiment of the invention;
Figure 14 shows an illustrative view of the logical architecture of the client assembly portion of a system of the invention; and
Figure 15 shows an illustrative view of an exposure report in accordance with an embodiment of the invention.

The drawings are for illustrative purposes only and are not to scale.

### DETAILED DESCRIPTION OF THE ILLUSTRATED EMBODIMENTS

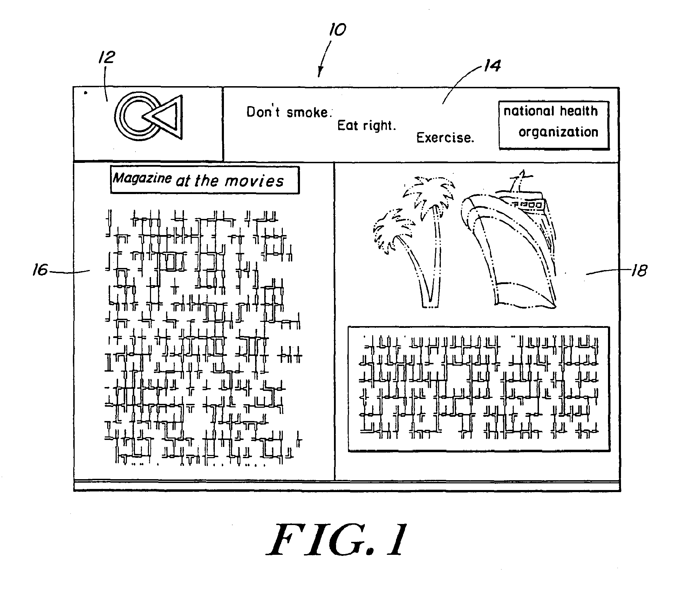

In accordance with a preferred embodiment of the present invention, a system is provided for the purpose of conveying digital content to moviegoer audiences. The content includes advertising and non-advertising content from various sources assembled into a presentation. Several sets of contents may be presented concurrently. For example, as shown in Figure 1, four sets of content may be provided in a single composite screen image 10, each in its own frame 12, 14, 16 and 18.

The example presentation in Figure 1 is based in Hypertext Markup Language (HTML). Each frame contains an HTML page with visual contents. The overall presentation length of the example is designed to run for a specified period of time, e.g., 20 minutes. In most cases the page is scripted to change the contents over this time, either through scrolling or through contents replacement.

The upper-left frame 12 contains a page with a single GIF image that is an icon for the system and conveys the name, logo and a means of contacting the operator of the system.

The upper-right frame 14 contains a page which presents a set of GIF images (some are animated, others are static). These GIF images are typically referred to as "banner ads". The page presenting the ads is scripted to change the displayed ad every 10 seconds. In this way, 40 individual GIF images may be completely cycled in 6 minutes and 40 seconds. Each ad, for example, may be shown 3 times in a 20 minute period. The advertiser for the frame 14 may be a national health organization, and may, for example, include a logo in the right side of the frame 14.

The lower-left frame 16 contains a page with mixed text and graphics. The text and graphics are news items. They are scripted to scroll up from top to bottom in 6 minutes, 40 seconds. Again, the content is shown three times in a 20 minute period. The text and graphics in the frame 16 may be, for example, general interest movie information and news in the form of a magazine.

The lower-right frame 18 contains a page with a set of contents. The page is scripted to present the contents over a 20 minute period. The contents are primarily trivia and word games, but the last item in the set is a feature ad as shown in Figure 1. The trivia and word games are shown for the first 19 minutes, and the feature ad is shown in the last minute. The trivia and word games are text and graphics, like the news items, but the feature ad is a Shockwave animation. The advertisement may, for example, communicate the availability of movie related items at national fast food restaurant stores.

The presentation is transferred using Internet technology in its typical client-server configuration. The HTML content is accessed and rendered to the screen or other output device by a web browser such as INTERNET EXPLORER (sold by Microsoft Corporation of Redmond, Washington) or NAVIGATOR (sold by Netscape, Inc. of Mountain View, California). The browser requests, receives and renders the HTML stream into a video and audio presentation. The browser is the end-user of the HTML content otherwise known as the client. The content comes from another process, a server process, that is always running and replies to content requests. Serving HTML requires a transport protocol to move the content from the server process to the client. This protocol is the Hypertext Transport Protocol (HTTP) and the server process is called an HTTP server.

The content in the example shown in Figure 1 includes a system logo, banner ads, news items and trivia. In other embodiments, the content may also include, but is not limited to, sports casts, event schedules, reviews of movies, theater, other events, editorial and gossip columns, cartoons, famous works of literature or art, live or recorded video of places, people and things, and health tips etc.

The presentation is not limited to four frames shown in Figure 1. The presentation may provide one frame only or any number of a plurality of frames. Four was chosen for the example because it is believed to be the optimal number for the moviegoer audience to view. However, tests of other frame arrangements and frame counts may be made in an attempt to further optimize presentation. Also, the arrangement and count of the frames may vary for a variety of purposes, and the presentation may be designed to run any length of time other than 20 minutes.

Also, banner ads need not remain in GIF format, and may be static or animated. Such ads may be, for example, in JPEG format as (provided by the Joint Photographic Experts Group), in PNG format (written by Thomas Boutell and Tom Lane, released by the IETF as RFC 2083), in TIF format (provided by Aldus Corporation of Seattle, Washington), in BMP format (provided by Microsoft Corporation) or any other image file format. They could also be an animation or video contained in AVI format (provided by Microsoft Corporation), in MPEG format (provided by the Moving Picture Experts Group, released as IEC/ISO 11172-1, 2, 3 and subsequent specifications), in REALMEDIA format (provided by RealNetworks, Inc. of Seattle Washington), or in any other time-variant format. They could also be provided in a vector format such as WINDOWS METAFILE (WMF) format (provided by Microsoft Corporation) or any other vector format. The banner ads could also be an embedded object such as a SHOCKWAVE animation or some other format rendered through ACTIVEX (provided by Microsoft Corporation) or JAVA APPLET (provided by Sun Microsystems, Inc. of Pale Alto, California). Over time, new formats and object binaries to render them will become available. Because these new formats and binaries are designed for HTML or a successor of HTML, they will be candidates for use in the presentation of banner ads.

Ads also need not remain banners. They may be presented in any size or shape available in the parent page. Ads are also not limited to 10 seconds of exposure. The feature ad in the lower-right frame of the example in Figure 1 is a 60-second ad that is not a conventional banner size. These ads may also transition in many different ways including but not limited to scrolling and wiping. The content in the other frames, like the banners ads, may take any form available to HTML.

Each of the HTML format, HTTP protocol, the HTTP server, and the browser, work together to bring a presentation to an audience in the preferred embodiment. However, there are other languages, transfer protocols and rendering software that could be combined to create the same or similar result. An alternate means will certainly include the successor to HTML, Extensible Markup Language (XML) using Extensible Link Language (XLL), emerging and related specifications. Other alternate means serving the same purpose could also be derived from Standard Generalized Markup Language (SGML).

Other languages could also be constructed to serve the same purpose of storing, conveying and rendering text, images and graphics. These languages would likely be, but aren't required to be, specified through a Document Type Definition (DTD). These languages could render the content natively or they could host binary objects that render tagged sub-contents. This would eliminate the need for HTML, XML or any other SGML-based language and serve the same purpose of the present invention.

The contents need not be encapsulated in a language or script. They could be managed through the use of a bill of materials. The bill of materials would simply be a list of contents with or without associated attributes and operating parameters. Such a list could be read by specialized display software and rendered according to the attributes and operating parameters. This would eliminate the need for a language and serve the same purpose of the present invention.

Attributes and operating parameters may also be embodied within the display objects themselves. In this way, a set of display objects could be taken as a stream and rendered by specialized display software according to their own internal attributes and operating parameters. This would eliminate the need for a bill of materials and would serve the same purpose of the present invention.

Whether by language, bill of materials, or a stream of objects, the data may be either pushed or pulled from a central server. The preferred embodiment pulls the content from the server to the client through an event or action initiated and controlled by the client. Techniques of pushing the data include, but are not limited to, webcasting technologies provided by the POINTCAST program (sold by EntryPoint of San Diego, California), and the CHANNEL program (sold by Microsoft Corporation).

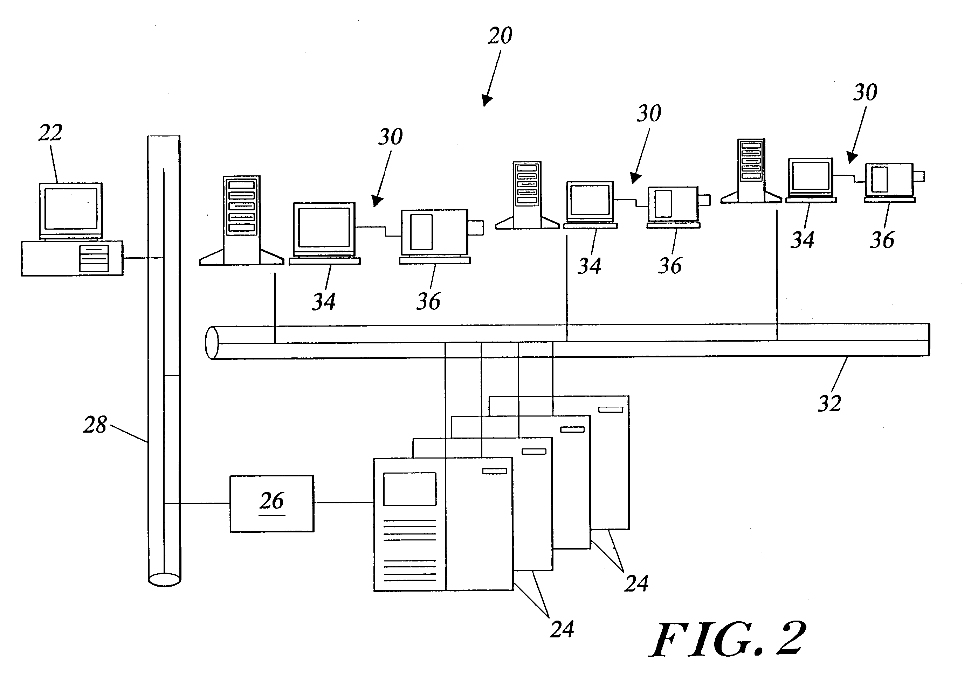

In a preferred embodiment of a system of the present invention, the overall system 20 may be described physically as an interconnected set of general purpose computers, software, and electronics as shown in Figure 2. These components include a central content provider 22, a set of servers 24 that are connected to the central provider 22 via the internet 28 through a firewall 26, as well as a set of client assemblies 30 that are connected to the servers 24 via an intranet 32. Each client assembly includes a client assembly processing unit 34 and a projector 36. This grouping of interconnected equipment facilitates centralized management of content yet distributed presentation of content. The servers 24 are housed in one or more central facilities while the client assemblies 30 are housed in the theatre buildings that they serve. The servers 24 are connected to the Internet 28, protected by the firewall 26, to facilitate outside access to the system.

The servers 24 are primarily tasked with receiving, storing, and assembling message content for presentation. The servers 24 are configured with fail-safe protections that provide uninterrupted service in the event one or more of the servers 24 fails to operate properly. Using redundant processors and storage devices, a failure in one area is immediately compensated for in another area until the failed system is restored and becomes operational. Additionally, sites containing clusters of servers will be geographically distributed to serve local regions. In the event of a site failure, one or more other sites will pick-up the service until the site is restored. Through equipment and site redundancies, there will be no single point of failure for the system as a whole.

The servers are geographically located at sites with access to high-quality power and communications services. The physical architecture of the servers may be scaled and partitioned to keep pace with system demand. Clusters will be replicated for redundancy and to reduce the cost of implementing the WAN. The servers will run UNIX (an operating system developed at AT&T now offered by many vendors) or a similar operating systems capable of hosting multiple server processes on the same machine and facilitating the present invention's logical architecture. Alternate operating systems include, but are not limited to, LINUX (developed by Linus Torvalds of Santa Clara, California), AIX (sold by International Business Machines of Armonk, New Jersey), VMS (sold by Digital Equipment Corporation, a subsidiary of Compaq of Houston, Texas) and WINDOWS NT (sold by Microsoft Corporation). This includes, but is not limited to, all forms, versions and variations of these operating systems.

The server computers, themselves, may be general purpose computers, and may include one or more central processing units (CPUs), random access memory (RAM), and persistent data storage device (e.g. magnetic disk). The CPU executes the software instructions, thereby operating on the data. The instructions and data are staged for execution in RAM. The software and data are primarily maintained in the persistent data storage device. General purpose computers are available from IBM, HP, Sun, DEC, and many other vendors. The preferred embodiment of the system will make use of one or more types of computer from one or more vendors based on price/performance criteria.

The client assemblies 30 are primarily tasked with rendering message content. Failure of one client assembly has no adverse effect on the servers, other client assemblies, or the interconnections. Failures are managed through rapid repair and/or replacement.

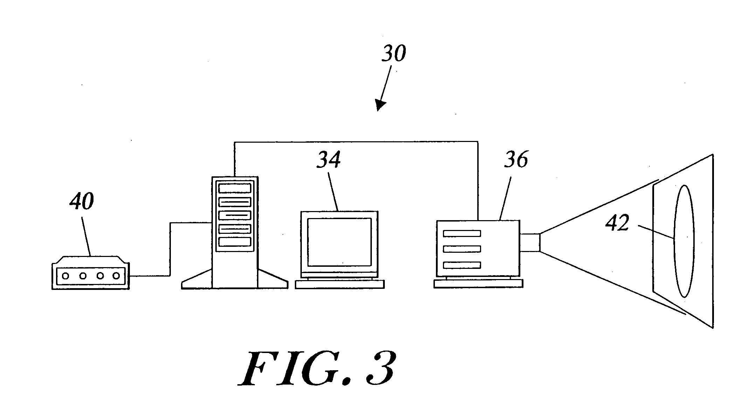

As shown in Figure 3, the client assembly 30 includes the personal computer (PC) 34 that is connected to the system's intranet 32 via a connection port 40 through which it receives presentations. The assembly 30 also includes the digital projector 34 through which the PC renders the presentations onto a theatre screen 42. Figure 3 illustrates a single-screen cinema physical configuration in which the PC stands alone as the local recipient and staging platform of the presentation as well as the presentation system that renders the content to the screen.

As the local recipient and staging platform of the presentation, the PC 34 receives the presentation via the intranet connection and stages it for access by a local server process. When the presentation is started by a screen operator, it is rendered to the digital projector 36 and projected to a screen 42 for the audience to view. One assembly is required for each screen location for the projection of messages from the present invention. However, in a multi-screen cinema complex, the configuration is varied.

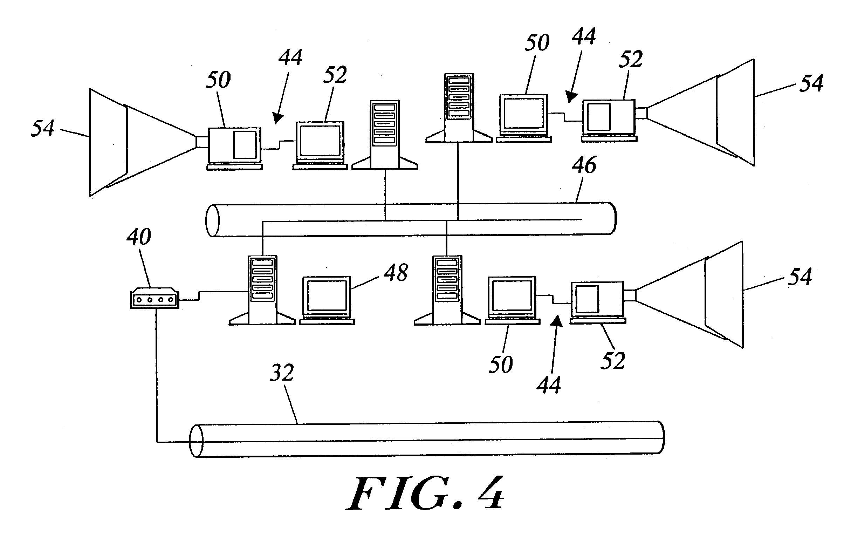

As shown in Figure 4, in another embodiment of the invention relating to applications involving a multi-screen cinema complex, each of the client assemblies 44 is connected to a sub-net (Local Area Network or LAN) 46, which in turn is connected to a PC subnet server/http server 48. The server 48 is connected to the intranet 32 via an intranet communication port 40. The local sub-net server 48 acts as a single point of contact to the Intranet and as a local HTTP server. In this way, the client assemblies on the sub-net share the connection to the system's Intranet rather than requiring individual connections. Furthermore, the presentations are served from a single machine that is updated more efficiently than updating the individual client PCs separately. Additionally, the presentation logs are generated on this common machine and transferred back to the central servers more efficiently.

Each client assembly 44 includes a PC 50 that may be any general purpose small-scale computer capable of running the required software. This includes small-scale computers that have not been traditionally labeled as a PC, but have perhaps been labeled workstation or some other name. For example, such systems may include a 200 MHz or faster single or dual processor computer with 64 or more megabytes of RAM and 2 or more gigabytes of magnetic disk storage. Suitable processors include but are not limited to the Pentium family of CPUs manufactured by Intel Corporation of Santa Clara, California and comparable CPUs manufactured by Advanced Micro Devices, Inc. of Sunnyvale, California and Cyrix, a subsidiary of VIA Technologies of TaiPei, Taiwan. Additional suitable processors include but are not limited to the POWER PC processor (provided by Motorola, Inc. of Schaumburg, Illinois).

Each client assembly 44 also includes a projector 52 that is a high-intensity output device that projects a digital image onto a reflective surface 54 to be viewed by a large audience. Suitable projectors for the purpose of projecting a digital image onto a commercial movie screen include but are not limited to projectors manufactured by Barco Display Systems of Kortrijk, Belgium, Digital Projection International, PLC of Manchester, England, and NEC of Tokyo, Japan.

The intranet 32 may be, for example, a wide area network (WAN), and may be established through one or more types of physical connections including but not limited to: wire, radio, fiber-optic and satellite. With TCP/IP running as lower level protocols, higher-level protocols such as FTP and HTTP are used to transport content from one computer to another.

The internet connection 28 is a high-speed connection from one or more system servers to one or more Internet Service Providers (ISPs). The one or more servers connected to the Internet include firewalls. The firewalls provide advertisers and other content providers with secure access to the system but protect the system from malicious activities of others on the Internet.

Connection to the Internet means that content providers may convey their message content from any point of access to the Internet. Because the Internet may be accessed by many points throughout the world, this means that content providers can access this system from many points throughout the world.

Alternate architectures may serve the same function as the preferred embodiment of the present invention. These alternate architectures include, but are not limited to, a wholly centralized architecture; and multi-projector assemblies.

In the wholly centralized architecture, the presentation is either staged or assembled on-the-fly from its component contents and conveyed directly to the presentation PC for rendering and projection to the movie screen. The challenges in such a system include potential spikes in server demand as well as in network traffic. However, movie schedules could be staggered to reduce demand spikes and/or servers and networks could be scaled up to meet these surges. Such a solution might, in-fact, become the preferred embodiment at a time when servers have excessive capacity and networks have excessive bandwidth.

The multi-projector assembly is one in which a single computer drives more than one projector and screen. This might be an appropriate solution if the presentation on all the screens at a cinema complex were to be the same. It might also be an appropriate solution if the computer were powerful enough to render more than one presentation at a time or if the presentations were guaranteed not to overlap through staggered scheduling.

The PC that serves the client assembly might be replaced with specialized hardware and software for the specific purpose of interfacing to networked computer equipment and perhaps specifically networked Web servers. This specialized equipment includes, but is not limited to, the family of diskless workstations and "set-top boxes" otherwise known as Web-TV. Since the client assembly in many instances does not need to persist any content, this equipment would be a suitable and cost-effective substitute.

In the cinema complex, the sub-net server is shown as a server-only computer. The sub-net server could serve the dual functions of staging the presentation content locally and rendering content to a screen as part of the client assembly.

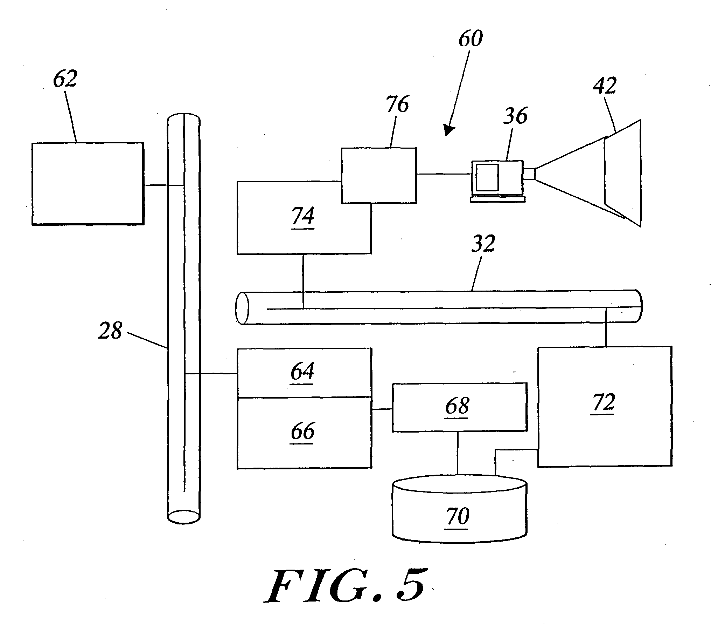

A client-server logical view 60 is provided in Figure 5, which shows the steps of access and data flow in the primary use case of the present invention. Contact is established by the content provider when they enter the Universal Resource Locator (URL) for the present system into their web browser 62 (Internet Explorer and Navigator are among the possible browsers). Access to the system is provided by an HTTP server 64 which answers the browser's HTML page request. The content provider will establish a working session with the system by logging-in. Supporting the session and dynamic data exchange is a Hypertext Preprocessor 66. In a preferred embodiment, the system uses the APACHE HTTP Server (sold by Apache Software Foundation of Forest Hill, Maryland), which is integrally compiled with the PHP hypertext preprocessor (developed by PHP Development Team of which is centralized at www.php.net).

Apache serves pages with PHP script code, and the script code is executed by the PHP interpreter prior to serving the page. In this way, the Apache/PHP server is able to execute instructions, including Transactional Services 68, detailed below and return the results as part of the HTML page delivered to the content provider's web browser. To interact with the present invention, the content provider chooses to log-in to the system by clicking on a login prompt which presents a login page. In the process of moving to the login screen, the HTTP protocol shifts to a secure socket port which encrypts the data flowing across the Internet. The exchange will remain on the secure port until the content provider logs-out, which marks the end of the session. HTTP exchanged over a secure socket port is frequently referred to as HTTPs. This provides adequate protection of the data exchanged during the course of the session.

Apache and PHP are just one solution for implementing dynamic Web interface, often referred to as dynamic HTML (DHTML). Other solutions for server-side implementations include, but are not limited to, JAVA SERVER PAGES, or JSP (sold by Sun Microsystems), ACTIVE SERVER PAGES, or ASP (sold by Microsoft Corporation) and COLDFUSION (sold by Allaire Corporation of Newton, Massachusetts). These share the same principle of operation. However, DHTML is not the only technology that may support the requirements of the system of the present invention.

Other solutions include the use of HTML to embedded binary (machine code and/or virtual machine code instruction) interfaces and server-side processing support. Technologies which facilitate client-side interface binaries include, but are not limited to, JAVA APPLETS and ACTIVE X controls. Technologies which facilitate server-side processing binaries include, but are not limited to, COMPONENT OBJECT MODEL (provided by Microsoft Corporation), ENTERPRISE JAVA BEANS (sold by Sun Microsystems), and COMMON OBJECT REQUEST BROKER ARCHITECTURE (provided by the Object Management Group centralized at www.omg.org). The system of the present invention might be implemented using these or similar technologies. Such a use would likely follow the same or similar three-tiered architecture of the preferred embodiment and would likely use the same or similar equipment as described herein. Whether or not such a system uses the architecture and/or equipment of the present invention, it could function to serve the same purpose of the present invention.

Development environments that bring these technologies together for the purpose of enterprise application development include, but are not limited to SILVERSTREAM (sold by SilverStream, Inc. of Billerica, Massachusetts) and VISUAL AGE (sold by International Business Machines). The system of the present invention may be implemented using these or similar development environments.

The content provider connects their desktop computer 62 via a browser to the HTTP Server 64 by entering the system's URL (e.g. http://www.cinecast.com) into their browser. The content provider enters a user name and password as part of the login process. The PHP script instructions call a login service in transactional services 68, which, in turn, queries the database 70 for a match. If a match is found then a session is created under the content provider's account and the user is presented with a main page offering a series of options for the creation and management of content managed as jobs. The content provider creates a job that is stored in the database 70 by way of similar PHP script instruction(s) and transactional service(s). Among the information stored as part of the job is a requested schedule of showings for the content, the locations of the showings and the content itself. When the preparation of the job is complete, the user submits the job.

Submitted jobs are pending approval before their contents will reach the screen, as further described below. If the job is approved, then it is ready to be processed by the schedule and production daemons 72.

The schedule and production daemon 72 schedules all showings for all locations. As movie schedules become available and as job schedule requests become ready for scheduling, the schedule daemon generates the content schedules which will be used by the production daemon. This process is described in more detail below. The schedule, production and logging daemons 72 also produce presentations for each showing of a movie at each screen location. Presentations are transferred to the HTTP server local to the screen location of the showing 74. The local HTTP server could be running on the Client PC or on the sub-net PC, depending on the site configuration.

At the start of the seating period or at the start of the pre-feature period or both or at any other scheduled time, the exhibitor, or a device controlled by the exhibitor, may invoke the start of the presentation. The presentation will be rendered through the projector 36 onto the screen 42. The preferred embodiment uses a front-screen projector, however, a rear screen projector could also be used. In fact, the output device could be any other device including but not limited to a CRT, LCD or LED device located in or around the theater auditorium, halls, lobby, entrance or other location where people wait, pass or accumulate.

A presentation log is generated by the local HTTP server 74 through the course of each showing of each presentation. The logs are transferred from the client assemblies back and read. As the logs are read, job schedules are updated to confirm that the contents were presented. In this way, the jobs can be audited for completeness in execution and reports can be generated. Logged job schedules will be queried in conjunction with the box-office data to develop detailed exposure reports for the purpose of billing and/or cost/benefit analysis.

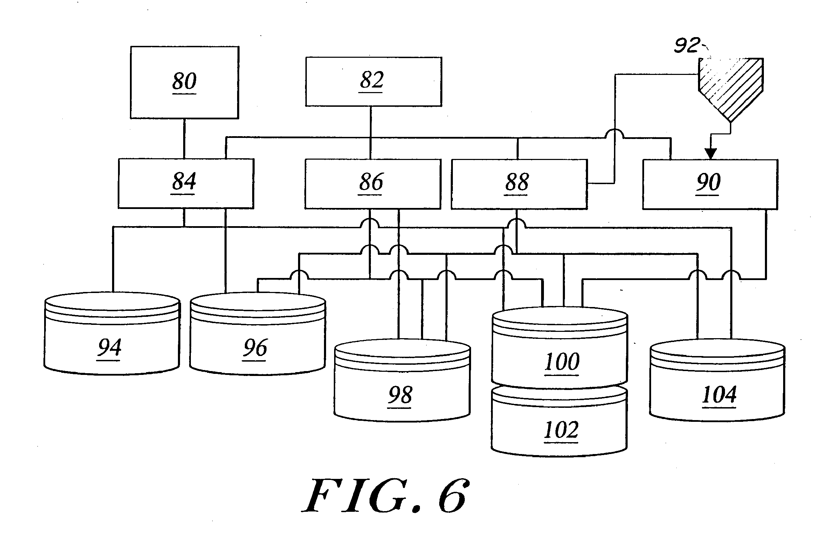

The high-level server-side architecture shown in Figure 6 includes a more detailed view of portions of the system shown in Figure 5. The system includes a three-tier architecture, noting that the user interface (UI) is implemented using a Web-centric approach, arguably multi-tier itself, and also noting that its ultimate function is to prepare presentations for the Client Assembly, which, itself, is a two-tier architecture.

As shown in Figure 6, the high level server-side logical architecture includes two-tier, three-tier, and multi-tier architectures that refer to an organization of the user interface (UI), processing, and data storage requirements associated with most informational systems. Each of these three requirements is layered into a tier, with the UI tier typically referred to as the first or top tier, the processing tier typically referred to as the second or middle tier, and the data storage tier typically referred to as the third or bottom tier. Specifically, the first tier includes an HTTP server (secure) for external content provider access 80, and an HTTP server for Internet system access 82. The second tier includes transactional services which supports UI functionality 84, a schedule daemon which maps requests to actuals 86, a production daemon for assembling presentations 88, and a logging daemon for retrieving presentation logs 90. The preparation of the client assembly 92 is itself a two tier process. The third tier includes account and users storage 94, exhibitors and sites storage 96, movies and releases storage 98, jobs and schedules storage 100, job content storage 102, and staging volume storage 104. A three-tier architecture organizes the system into these three distinct tiers. In a two-tier architecture, processing is divided between the first and third tiers leaving the UI tier and the data storage tier. Multi-tier simply refers to a two or three tier architecture.

While the third tier is labeled last, it is frequently the first tier to be designed. After the requirements are understood, the artifacts can be identified and represented for persistence in a database or some other data storage system. Processing in the second tier can then be modeled on the data in the third tier and finally useful representations of the data can be exchanged with the user and processing options made available to the user in the UI tier.

The data storage (or third) tier is organized into four broad groups of data (in databases) and two volumes. These four databases may or may not comprise physical divisions in the data. The account and users database 94 maintains records of contact, billing, login and other account-pertinent information. The job and schedules database 100 maintains records of individual job contexts describing content. Each context includes provider information, scheduling information, workflow state information, other context-pertinent information and a vector to the actual content data stored in the job content volume 102. The exhibitor and sites database 96 maintains information describing each screen location, actual schedules, box office sales data, membership within a complex, membership within an exhibitor and other site-pertinent information. Movie information is stored in the movies and releases database 98 along with a description, genera classification, expected box-office gross and other pertinent information. Presentations are staged in the staging volume 104 awaiting transfer to their target site(s).

The reason for using a database is because it offers reliable recovery of complex data and data relationships. The type of database management system (DBMS) used in the system of the preferred embodiment is a relational database. Other options for the DBMS include hierarchical, object-oriented, and networked. The preferred embodiment of the system will make use of one or more types of DBMS from one or more vendors based on price/performance criteria. Suitable DBMS software includes, but is not limited to, Oracle (sold by Oracle Corp. of Redwood Shores, California), SYBASE (sold by Sybase, Inc. of Emeryville, California), INFORMIX (sold by Informix Software of Menlo Park, California), and DB2 (sold by International Business Machines).

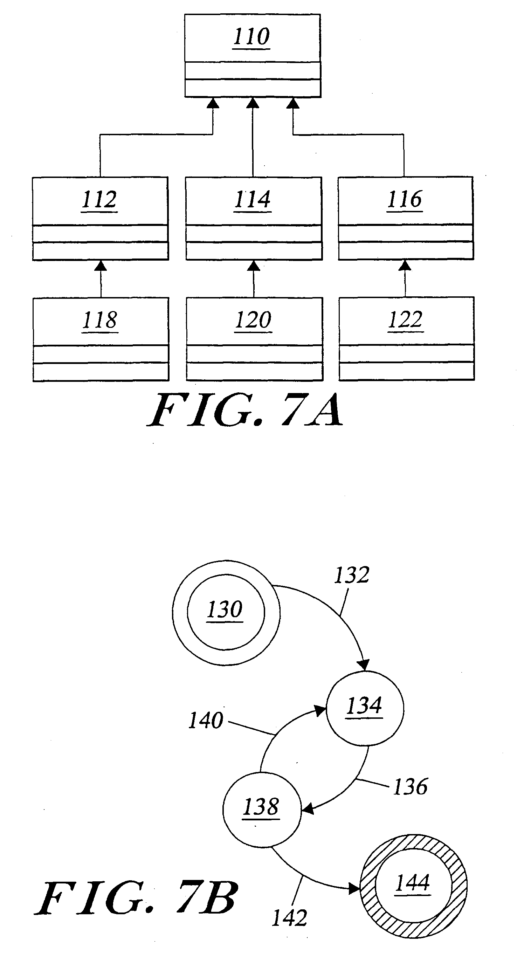

The user is an abstract class. Deriving from user 110 are several classes as shown in Figure 7A. Most of these classes are records containing information about actors with specific permissions to interact with the system. An actor is someone or something outside the system or business that interacts with the system or business, as provided by Rational Unified Process software (sold by Rational Software Corporation of Cupertino, California). Specifically, the classes may include an account contact 112, and exhibitor contact 114, a system administrator 116, a job contact 118, a site manager 120, and a system operator 122. The system administrator 116, job contact 118, site manager 120 and system operator 122 are each actors.

All of the user classes share the same states and state-transitions. With reference to Figure 7B, a user class is begins at state 130, and is created (shown at 132) by the system administrator 116 or system operator 122 (only system administrators may create, modify, or delete new system administrators and new system operators). Once created, the user is in an active state (shown at 134), which is the normal state of the user. In the active state, the user may open a working session with the system and interact with the system to their extent that their class allows.

A user may be suspended (shown at 136) by a system administrator 116 or system operator 122. The suspended user (state 138) may establish a working session with the system, but in a very limited capacity. The purpose of this state is to prevent a user from manipulating any artifacts on the system and in the case of system operators and system administrators, to significantly reduce their other privileges as well. An artifact is a piece of information that is produced, modified, or used by a process, that defines an area of responsibility, and that is subject to version control. An artifact may be a model, a model element, or a document as provided by Rational Unified Process software (sold by Rational Software Corporation). A user may also be restored from the suspended state 138 to the active state 134 as shown at 140. A user is terminated (as shown at 142), and the termination state 144 is the end state for a user class. In termination state 144, the user cannot establish a working session with the system. In further embodiments, additional states may be added, which may be useful for providing partial functionality.

The account contact 112 does not describe an actor in the system, but a contact for an account, financial, administrative or other entity. One or more account contacts are created when an account is opened. Account contacts are expected to be added, deleted and changed over the life of an account.

The job contact 118 is derived from account contact 112. The job contact 118, however, does describe an actor in the system. The job contact 118 is a contact for one or more particular jobs. The job contact 118 can fill one or more roles with regard to a job including, job-author, job-editor, or job-reader. While these roles are not presently differentiated thereby extending the user class hierarchy, they could be in various further embodiments. The job contact 118 may create, schedule-request, submit and cancel jobs for which they are a designated contact. A job contact is, by default, the designated contact for jobs they create. Additional job contacts may be designated by an existing job contact or by a system operator or by a system administrator.

The exhibitor contact 114 does not describe an actor in the system, but a contact for an exhibitor, financial, administrative or other entity. One or more exhibitor contacts are created when an exhibitor is created. Exhibitor contacts are expected to be added, deleted and changed over the life of an exhibitor.

A site manager 120 is derived from an exhibitor contact 114. The site manager 120, however, does describe an actor in the system. The site manager is a contact for one or more exhibitor's sites. The site manager 120 may create, delete and modify schedules (for future showings) and box-office sales data (from recent showings) of a particular movie release on a particular screen belonging to a site for which he or she is a designated manager. Site managers are designated by a system operator or a system administrator when a screen is added to a site or when a site manager is initially created. Site managers are created by either a system operator or a system administrator.

A system administrator 116 describes an actor in the system. System administrators may effect any and all changes to the system including but not limited to: changing system data stored in the databases and in the system volumes, starting and stopping processes, daemons, and servers and services, and adding, removing and configuring hardware.

A system operator 122 describes an actor in the system. A system operator 122 may effect changes to the data stored in the databases and in system volumes. These changes are limited by the internal system interface they are provided. They cannot make ad-hoc changes to the data through direct interfaces such as a command shell in the operating system or through an "immediate" interface allowing ad-hoc queries to the database.

An account is an artifact that defines a unique content provider. An object of type account may be created for an advertiser, a non-profit organization, an agent of either such as an advertising agency, or any other type of content provider. An account must have one or more account contacts that may or may not also be job contacts. Account contact(s) is/are responsible for the appropriateness of the content they provide and for payments to the account. An account and its state are represented in CC_ACCOUNT and the supporting tables.

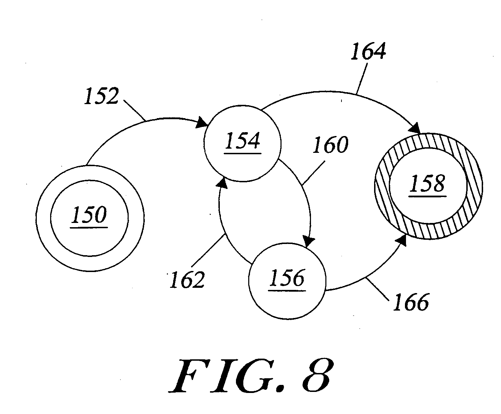

An account may be created by a system operator or system administrator. This process begins at state 150 as shown in Figure 8. Once the account is created (shown at 152), it is in the active state 154. The account has two other states, suspended 156, and closed 158. An account may be suspended from the active state 154 as shown at 160, and may later be restored to the active state as shown at 162. An account may be closed from either the active state 154 (as shown at 164), or from the suspended state 156 (as shown at 166). An active user associated with an active account, may create new or manage existing associated jobs. An active user may review existing jobs associated with a suspended account. An active user cannot access any information associated with a closed account. Accounts are suspended for billing issues, malicious activities, or after a period of inactivity. Accounts may be closed for reasons such as, but not limited to, the existence of issues cannot be resolved, or if the content provider for the account dissolves.

A job artifact is the combination of message content and its context. The content could be, for example, a static or animated GIF file, a Shockwave segment or anything else that may be displayed by or hosted in HTML or XML. The context is a schedule request, target audience, and other pertinent information. While a job object is a transient object with a finite start, life, and end, it has a continuing representation in the persistent entity (database "table") CC_JOB and its supporting tables.

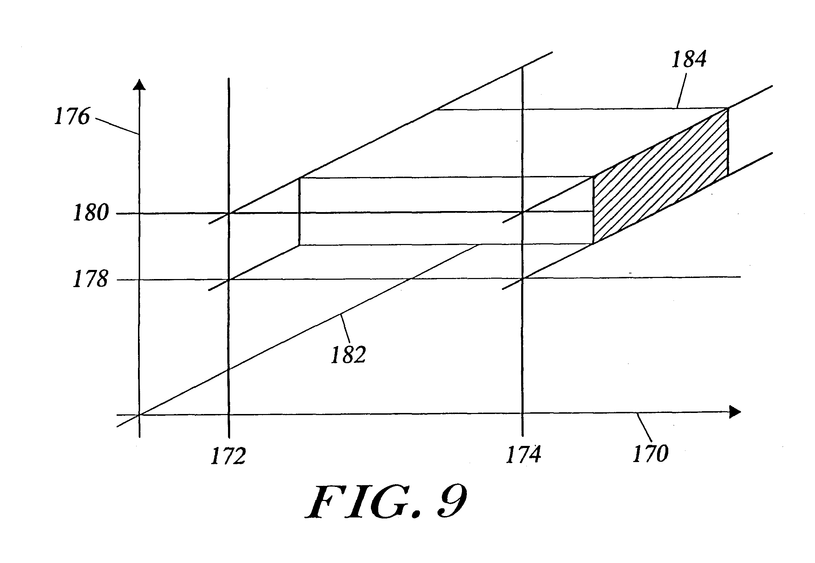

A job must have one or more schedule requests defining where and when the content will be displayed. However, it is only a request and might not be fulfilled. Request fulfillment is the responsibility of the schedule daemon. As shown in Figure 9, the schedule request has up to four dimensions describing when and where it will be shown, start and end dates, times of day, location, and movie. In particular the axis indicated at 170 represents the date, along which start and end dates (172 and 174 respectively) lie. The axis indicated at 176 represents the time of day, along which start and end times (178 and 180 respectively) lie. The axis indicated at 182 represents the location, and the three-dimensional box defined by the above represents a particular movie 184. An additional priority attribute may also be available. Specifically, a priority called run-of-house is a low-priority that places the content based on last-minute availability, does not reserve the time-slots and may therefore be pre-empted. This option may be made available at a lower cost to the content provider.

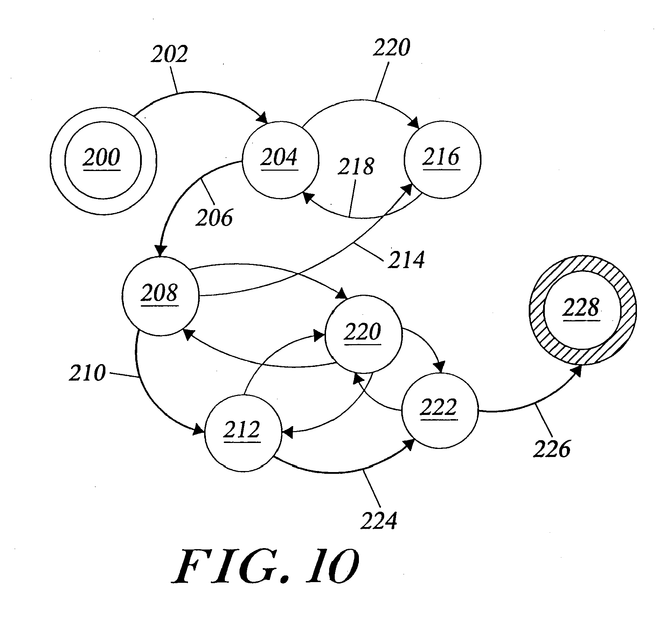

A job may be created by a job contact, a system operator or a system administrator. A job begins at state 200 and is created (as shown at 202) in Figure 10. The job is initially created in an active state 204. The creator of the job is designated as the initial contact for that job. Only the contact, a system operator or a system administrator may update the job from that point forward. The contact for the job may update an active job by updating the job content, adding, deleting and changing schedule requests and by submitting it or canceling it. A system operator or a system administrator may also perform these operations.

Once the job has been completed, the content transferred and one or more Schedule Requests added, the job contact may submit the job (shown at 206) to be approved. Submitting a job is the first step in the workflow of the system. Because the system is job-centric, the workflow follows the state transitions of the job. The primary flow is indicated with heavy arrows in Figure 10.

A submitted job is pending approval (state 208) for completeness, lack of conflicts, appropriateness, and available capacity. If the job is approved (shown at 210), its state changes to approved (212). If it is not approved, it is rejected (shown at 214) and placed into an inactive state 216, and the content provider would be notified of the rejection. The content provider may then make alterations and re-submit the job (shown at 218) by first having it reactivated. An active job may also be cancelled as shown at 220.

Approved jobs are queued (state 220) according to date approved and scheduled by the schedule daemon. Running jobs (state 222) are approved jobs that have started running as shown at 224. Once a job has been shown for the last time (as shown at 226), its state changes from running to archive (step 228). From any of the states, pending, approved, and running, the job may be suspended. A suspended job is in a suspend state and may be unsuspended at any time. While in the suspend state, the content of the job will not be presented.

As the job runs, its schedules get logged as it is shown or not-shown (with a reason code). Logged schedules account for the time and location that the job content was shown. The last log attribute is inserted after the final showing and the job is set to archive.

Clients are maintained in the system for reasons of conflict. An advertiser may strike an exclusive deal with the media manager or with the exhibitor that prevents one or more competitors from advertising under certain circumstances. Furthermore, an advertiser may want to review the most current list of advertisers prior to submitting a job. The entity CC_CLIENT is the representation for all clients. Among attributes in this and in supporting tables is a representation for all conflicting relationships.

The movie object is a description of the film's content. A release object is an extension of the movie object indicating release date, expected gross, and other studio estimates. This relationship facilitates re-releases, limited releases, and sneak previews. Movies and releases will be populated as they become known from the studios. Second run movies and classic movies will be back-filled. Movies and releases are represented in CC_MOVIE, CC_MOVIE_RELEASE and supporting tables.

A showing object is a particular movie shown on a particular screen at a particular time. A schedule object is created by the schedule daemon to reserve a job for a particular showing, and these objects are represented in CC_SHOWING and CC_JOB_SCHEDULE. Box-office receipt objects (receipts) are entered or loaded into a CC_BO_RECEIPTS table. Receipts detail the head-count and gross ticket sales for every showing. As receipts become known, they may be used with logged schedules to find a job's exposure.

The screen object represents an individual movie screen (screen). One or more screens have membership in a site object. A site object is a cinema complex or megaplex or some other collection of co-located screens. One or more sites have membership in an exhibitor object, and a site object is located in a region object. A request may specify a screen, site, exhibitor or region. Schedules are associated with a screen because the request has been resolved to one or more screens. Exhibitors, sites, screens and regions are represented in CC_EXHIBITOR, CC_SITE, CC_SCREEN, CC_SITE_REGION and their supporting tables.

The screen presentation is segmented. The example snapshot shown in Figure 1 has four segments. The format object contains the HTML, XML, or SGML-based codes which describe the segmentation layout. Each segment is a frame object that may or may not have its own code. Job content is targeted to a specific frame type with a specific size and a purpose. One type of frame type is a banner frame that is used to convey banner content, short but wide, and typically advertising. Another type of frame is the feature frame, which is bigger and more prominent than the banner frame. The feature frame is typically used to convey non-advertising content such as trivia or news. The format and frame objects are configurable and can describe any layout for maximum extensibility. The format and frame objects are represented in CC_PRESENTATION_FORMAT and CC_PRESENTATION_FRAME.

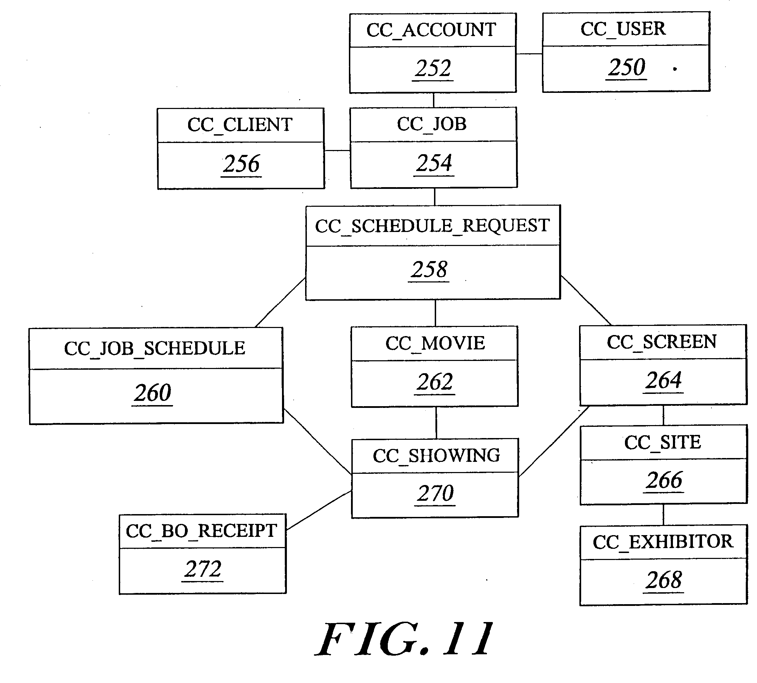

The Database may be modeled by an entity relationship diagram as shown in Figure 11. The diagram of Figure 11 shows the relationships between important data of the system and how system artifacts are maintained - namely, the tables and their interrelationships. This diagram is only one of many ways to represent the data and details only the primary artifacts of the preferred embodiment. The database could be further normalized or de-normalized for performance or other reasons and it would still serve the same purpose.

The primary users 250 of the system are advertisers or advertising agencies that will establish an account 252. The account 252 will have the necessary attributes to facilitate billing. It is through an account that the user can create a job 254 relating to a client 256. A job 254 is a unit of work that embodies a piece of content and the delivery specifications for that content. The specifications for delivery are primarily maintained in one or more scheduled requests 258.

A schedule request 258 details the delivery of the jobs content to an intersection of one or more of time 260, movie 262, and or screen (location) 264. Therefore, a request may be as general as placing an ad against a particular movie or as specific as a particular movie at a particular time and in a particular location. With multiple requests per job, an advertiser may reach multiple market segments with the same job content. A job schedule is a job request that has been resolved to a particular show. Because shows, themselves, are scheduled 7-14 days in advance and because advertisers and agencies request shows weeks and months in advance, a job request can go unresolved for some period of time.

A movie is a particular attraction. The movie has attributes such as genre and rating that among other attributes will naturally appeal to a particular demographic of moviegoer. A screen is a movie screen which is at a physical site (or location) 266 and which belongs to an exhibitor circuit 268. A screen has particular attributes including geographical location and dimensions and seat/sound enhancements which will naturally attract a particular demographic of moviegoer.

Time is also an important aspect of a showing. Because time is linear, it may be referenced using standard numeric notation and maintained using standard time/date persistence techniques. A showing 270 is the intersection of exactly one movie at one time on one screen. A showing is typically established 7-14 days in advance. A receipt 272 is a record of attendance of a particular show.

Some of the tables may grow to contain a large number of records. Tables with changing data (working tables) such as CC_JOB_SCHEDULE may be purged regularly, and the purged records may be archived into a data warehouse having a similar schema. Archived data may be accessible through standard segmentation techniques such as date-based or id-based or through supporting vector (re-direct) tables or both or through some other standard technique. Non-working tables may also have to be segmented using similar techniques.

In the service tier, transactional services create, read, modify and delete information stored throughout the data storage tier in transactional units of work. The schedule daemon maps requested schedules to actual schedules as they become available. The production daemon assembles contents into presentations according to schedule and stages them for transfer. The logging daemon retrieves presentation logs from the client assemblies. Transactional services support the functionality available in the UI tier. The available functionality is determined by the type of user, their role with regard to the data they want to manipulate, and their privileges in the system. Transactional services include, but are not limited to creation, deletion, and updating routines for all the primary artifacts. They also include, but are not limited to state-transition routines.

One example of such a state transition routine is called cAccount.Create, which receives two arguments: strName (which is a cString) and iType (which is an integer). This routine returns an integer, iActID, which is a unique ACT_ID or negative error). This routine creates an account by adding an entry to CC_ACCOUNT. It assigns and returns a unique ACT_ID, initializes the account to the active state, and adds a creation note to CC_ACCOUNT_NOTES.

Another example of a state transition routine is cAccount.Delete, which receives two arguments: iActID (which is a 32 bit integer) and bDeep (which is a Boolean value wherein the default is false). This routine returns a boolean value bSuccess. With dBeep set to be true, this function deletes all of the associated contacts (CC_CONTACT), the contact notes (CC_CONTACT_NOTES), and addresses (CC_ADDRESS). This function actually deletes the account record with ID=iActID in CC_ACCOUNT and all of the notes in CC_ACCOUNT_NOTES.

A third example of a state transition routine is cAccount.Suspend, which receives one argument, iActID and returns the Boolean value bSuccess. This routine suspends the account record with ID = iActID in CC_ACCOUNT and creates a suspend note in CC_ACCOUNT_NOTES.

The schedule daemon is a continuously running process that connects contents from jobs to individual showings of movies. There is a limited number of contents that may be contained in a presentation, and this number is read and calculated from the designated presentation format and frame records. The schedule daemon reads the showings (CC_SHOWING) as they become available on the system. Ordered by approval date, schedule requests (CC_SCHEDULE_REQUEST) of the job are read, and entries are added to CC_JOB_SCHEDULE. After the presentation's capacity for contents has been filled all other requests are left unsatisfied. If a job request cannot be satisfied, then a notice in the form of an email or login message or part of the billing report is conveyed to the content provider. However, capacity may become available as new showings are added or previously scheduled jobs are canceled.

A job would not have been approved unless there is a high degree of certainty that it would be fulfilled. The exception is low-priority (or run-of-house) jobs that do not share the same high degree of certainty in placement. If the job can be satisfied, a job schedule entry is added to CC_JOB_SCHEDULE.

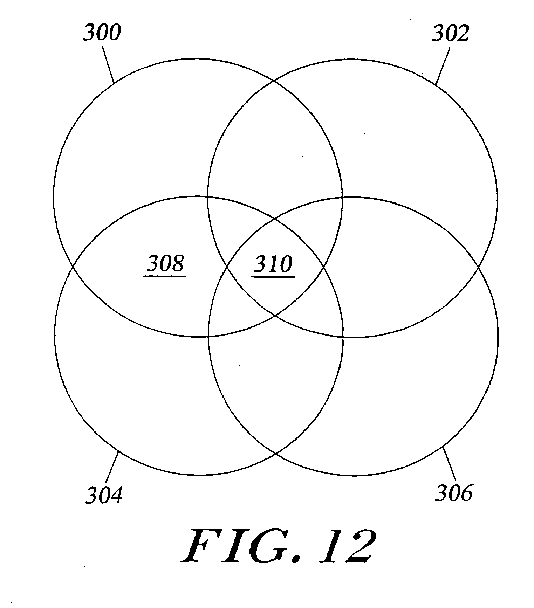

As shown in Figure 12, there exist a variety of permutations of schedule requests based on different combinations of factors such as the location 300, the movie 302, the time of day 304, and the date 306. The area indicated at 300 represents schedule request where the location is the specifically requested location, and no other criteria are specified. The area indicated at 302 represents schedule request where the movie is the specifically requested movie, and no other criteria are specified. The area indicated at 304 represents schedule request where the time of day is the specifically requested time of day, and no other criteria are specified. The area indicated at 306 represents schedule request where the date is the specifically requested date, and no other criteria are specified.

The overlapped areas represent combinations of specified criteria as shown. For example, the area indicated at 308 represents a combination of specifically requested location and time-of-day factors, where no other criteria are specified. The area indicated at 310 represents a combination of each of the location, movie, time of day, and date criteria.

These permutations translate directly into one or more SQL queries used to build the list. Once the list is built, duplicates are removed as it is currently assumed that duplicates are undesirable. Duplicates may be present because the schedule requests overlap, not because the queries overlap. This list is used to populate CC_JOB_SCHEDULE with schedules.

The production daemon creates the presentation from the format and frame definitions and the contents. The Format and Frame are designated by Site and Date from CC_PRESENTATION_FORMAT and CC_PRESENTATION_FRAME. The contents are read from the jobs that are scheduled by the schedule daemon. Any surplus capacity is filled using "Run of House", low priority, content.

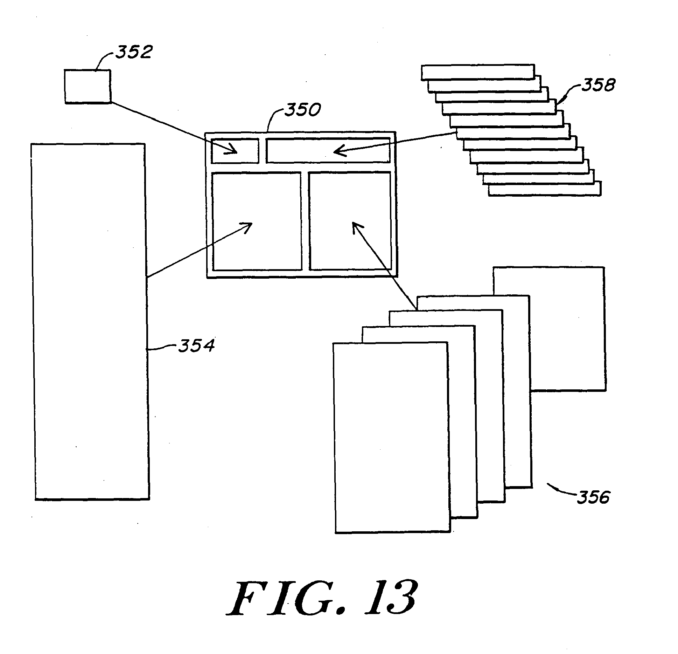

As shown in Figure 13, contents as assembled into presentations in accordance with a pre-defined presentation frame. For each page of the frame 350, the specified types of contents are assembled. The upper-left page 352 is a logo page and the logo contents are assembled for presentation at the appropriate part of the frame 350. The lower-left page 354 is a news page and the news contents are assembled with the scrolling script to animate it. The lower-right page 356 is a trivia and feature ad page so the trivia, feature ad and replacement script to change the contents are assembled. The upper-right page 358 is a banner ad page so the banner ad list generated by the scheduling daemon and the banner script to change the ads are assembled. The frame 350, pages 352 - 358 and the page contents comprise the presentation.

Presentations are staged for transfer. Schedules are compared to the schedules of the prior days and while duplicates are still registered, their content is not. This step reuses the content that has already been transferred and conserves bandwidth on the WAN. After staging, the content is compressed into a single file and transferred to the Client PC responsible for serving the presentation.

The logging daemon recovers the presentation logs from the client PCs responsible for serving the presentations. The logs are read and schedule entries are updated to confirm the fact that they were either shown or to indicate that they were not shown with a reason code.

In the user interface tier, the system is manipulated through the use of two separate HTML/HTTP (Web) interfaces, one that is exposed to the Internet and the other is limited to within the system's Intranet. The Internet exposure is secure and provides only the level of function necessary to describe, schedule and submit message contents. The Intranet exposure provides system operators and administrators full access to perform duties in the workflow and manage the system.

There are three primary user interfaces to the system, the provider interface, the exhibitor interface, and the operator interface. These interfaces provide the required functionality for the particular user to perform its work.

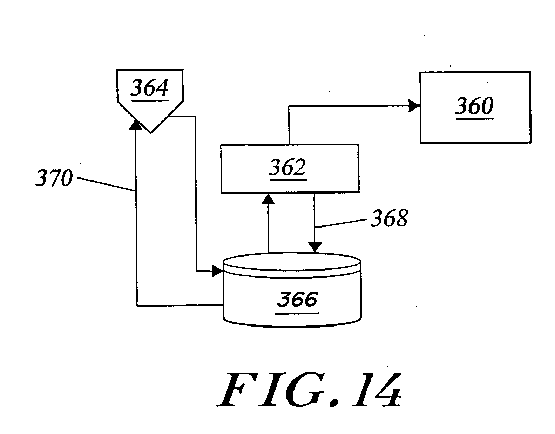

As shown in Figure 14, the client assembly logical architecture includes a two tier architecture composed of HTML/XML browser 360 exchanging data with an HTTP server 362. This architecture may be used regardless of whether the client assembly is stand-alone or multi-screen. Presentations are received from the server-side production daemon 364 and stored in a local volume 366. Transfer of the volume across the WAN is accomplished through the use of file transfer protocol (FTP), HTML presentation, a copy or move executed across a Network File System (NFS), or through a custom process using sockets. Once the presentation is local to the client assembly, it is ready to be presented to an audience.

Presentation begins when the HTML/XML browser 360 is loaded by a person at the client PC. The browser is set to the particular screen's URL. The local HTTP server 362 responds by sending the presentation from the local volume to the browser. The contents of the browser are displayed through the connected display hardware to be viewed by the intended audience.

As the contents of the presentation are served, the HTTP server 362 logs records into a file accounting for the fact that they have been served and thus presented before the intended audience. The records include, not only a unique ID of the contents, but also time and location data. The log files are collected periodically by the server-side logging daemon 364, and presentation log data is passed back from the HTTP server 362 to the local volume 366 as shown at 368, and from the local volume 366 to the server-side daemons as shown at 370.

An exposure report may also be prepared. The exposure report may be generated for a number of reasons including, but not limited to billing based on exposure, value supplements in the case of fixed-price jobs, and for advertising effectiveness.

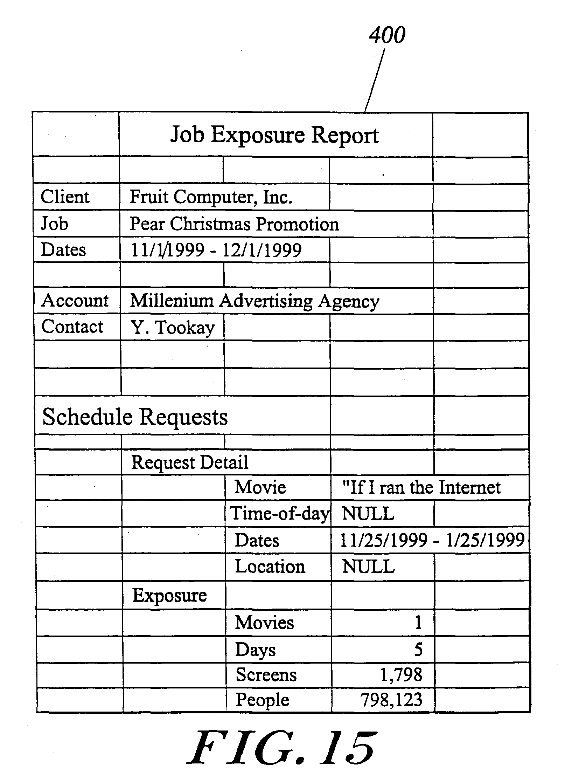

As shown in Figure 15, an exposure report 400 may include identification data such as client data, job data, the dates of run of an advertisement, an account (or agency), and a client contact. The exposure report may also include schedule requests data showing the details of the requests (such as movie, time of day, dates and locations) as well as details of the actual exposure (such as movies, days, screens, and people).

Advertising may be sold based on exposure or expected exposure. This means that the job may be paid for based purely on the number of people reached. Advertising may also be sold based on expected exposure. Further ways to add certainty to the sales based on exposure include, but are not limited to, employing an exposure cap in the schedule request.

In conjunction with client sales information exposure reports may be used for cost/benefit analysis and to refine the target markets. This type of analysis requires simple correlation analysis by-location, by-movie, or by-time. In this way advertisers may adapt their advertising habits and develop more targeted and cost-effective plans.

It will be apparent to those skilled in the art that various modifications and variations can be made in the system and method of the present invention without departing from the spirit or scope of the invention. The present invention covers the modifications and variations of this invention provided they come within the scope of the appended claims and their equivalents.

What is claimed is:

## Claims

1. A system for communicating with, and providing data representative of advertisement information to, digital presentation equipment (36, 52) in theatres, **characterized in** said system comprising:
job storage (100, 102) for receiving and storing a plurality of jobs (254), each comprising electronic content and one or more schedule requests (258, 300, 302, 304, 306) regarding conditions in which said electronic content is desired to be presented, wherein said electronic content may include an advertisement (14, 356, 358),
a plurality of digital presentation assemblies (30, 44) coupled to said job storage (100, 102) for receiving data from said job storage (100, 102),
a scheduling daemon (86) arranged to:
read data regarding a showing (270) of a movie in a theatre environment associated with each of said plurality of digital presentation assemblies (30, 44),
read data regarding said one or more schedule requests (258) associated with each said electronic content of each of said plurality of jobs (254),
select jobs from said plurality of jobs (254) through mapping said schedule requests (258) to each said showing (270) of the movie associated with each of said plurality of digital presentation assemblies (30, 44), for filling a presentation capacity for each said showing (270), and
a production daemon (88) arranged to create a presentation of electronic content associated with said selected jobs for each showing, and to provide a presentation for each said showing associated with each of said plurality of digital presentation assemblies (30,44).

2. A system as claimed in claim 1, wherein if the presentation capacity for a showing (270) has been filled, all remaining jobs for that showing remain unsatisfied by that showing (270).

3. A system as claimed in claim 1 or 2, wherein if there is spare capacity in the presentation, said production daemon is further arranged to add low priority job content to the presentation in order to fill the capacity.

4. A system as claimed in any of the preceding claims, wherein information regarding showings is stored in an exhibitors and sites storage (96).

5. A system as claimed in any of the preceding claims, wherein if a certain piece of content has previously been transmitted to a first digital presentation assembly (3 0, 44), said production daemon is further arranged to not re-transmit said piece of content from the presentation before being transferred to said first digital presentation assembly (30, 44).

6. A system as claimed in any previous claim, wherein each job (254) is directed to at least one of a requested movie, requested showing location, requested showing time, requested movie release start date and requested movie release end date, and the scheduling daemon is arranged to match these with at least one of a showing location (182), showing time (178, 180), movie release start date (172) and movie release end date (174) for said movie when selecting content to fill the presentation capacity.

7. A system as claimed in claim 6, wherein each job (254) is directed to at least two of a requested movie, requested showing location requested showing time, requested movie release start date and requested movie release end date, and the scheduling daemon is arranged to match these with at least two of a showing location (182), showing time (178, 180), movie release start date (172) and movie release end date (174) for said movie when selecting what content to fill the presentation capacity.

8. A system as claimed in any of the preceding claims, wherein each of said plurality of digital presentation assemblies (30, 44) includes a computer processing unit (34, 50) in communication with a digital projector (36, 52).

9. A system as claimed in any of the preceding claims, wherein said system further includes a network (32) coupled to said job storage (100, 102) and to said plurality of digital presentation assemblies (30, 44).

10. A system as claimed in any of the preceding claims, wherein said production daemon (88) is further arranged assemble a plurality of frames (352, 354, 356, 358) into a composite frame (350) for output by each said digital presentation assembly (30, 44).

11. A system as claimed in any of the preceding claims, wherein said scheduling daemon is further arranged to map said jobs (254) to a plurality of showings such that each selected job is mapped to a plurality of showings and each showing is mapped to a plurality of selected jobs.

12. The system as claimed in any of the preceding claims, wherein said system further includes a movie attendance feedback unit (90, 272, 364) for receiving data representative of information regarding a number of people attending each showing.

13. The system as claimed in any of the preceding claims, wherein said system further includes an exposure log generation unit (364) for recording data representative of the presentation of advertisements associated with the selected jobs that are associated with each showing.

14. The system as claimed in any of the preceding claims, wherein said system further includes an exposure log generation unit (364) for recording data representative of the presentation of content associated with each selected job and for providing an exposure report (400).
